Europäisches Patentamt

European Patent Office

Office européen des brevets

(19)

(11) Veröffentlichungsnummer: **0 273 028 B1**

# EUROPÄISCHE PATENTSCHRIFT

(12)

(45) Veröffentlichungstag der Patentschrift: **23.10.91**

(51) Int. Cl.⁵: **B29C 45/26**, B29C 45/37

(21) Anmeldenummer: **87890295.6**

(22) Anmeldetag: **22.12.87**

(54) **Form zum Herstellen von Gegenständen, insbesondere Schuhsohlen.**

(30) Priorität: **23.12.86 AT 3433/86**

(43) Veröffentlichungstag der Anmeldung:
**29.06.88 Patentblatt 88/26**

(45) Bekanntmachung des Hinweises auf die
Patenterteilung:
**23.10.91 Patentblatt 91/43**

(84) Benannte Vertragsstaaten:
**BE CH DE ES FR GB GR IT LI LU NL SE**

(56) Entgegenhaltungen:
**DE-A- 2 224 231**
**FR-A- 1 088 485**
**FR-A- 2 107 134**
**FR-A- 2 159 737**

(73) Patentinhaber: **LIM Schuhtechnologie**
**Ges.m.b.H.**
**Industriegelände**
**A-2421 Kittsee(AT)**

(72) Erfinder: **Lenk, Gerhard**
**Pressburgerstrasse 46**
**Kittsee(AT)**

(74) Vertreter: **Rippel, Andreas, Dipl.-Ing.**
**Maxingstrasse 34**
**A-1130 Wien(AT)**

## Beschreibung

Die Erfindung bezieht sich auf eine Form zum Herstellen von Gegenständen, insbes. Schuhsohlen, bestehend aus einer den Formhohlraum innen begrenzenden elastischen Einlage, die an einer Seite eine Trennfuge besitzt und an der anderen Seite ein elastisches Gelenk bildet, wobei die elastische Einlage in einer starren, insbesondere metallischen mehrteiligen Form gehalten ist und in ihrer Trennfuge einen Einspritzkanal aufweist.

Eine derartige Form ist aus den AT-Patentschriften 303.571 und 353.142 bekannt. Diese bekannten Formen haben den großen Vorteil, daß zufolge des elastischen Gelenkes beim hergestellten Gegenstand eine Nahtstelle im Bereich des Gelenkes nicht auftreten kann. Als Nachteil hat es sich herausgestellt, daß das elastische Gelenk einer hohen Beanspruchung unterworfen ist und daher eine frühzeitige Abnützung zu befürchten ist.

Die Erfindung hat es sich zum Ziel gesetzt, eine Form der eingangs genannten Art derart zu verbessern, daß die Beanspruchung des elastischen Gelenkes vermindert und damit die Lebensdauer der Form erhöht wird. Erreicht wird dies dadurch, daß bei geschlossener Form im Bereich des elastischen Gelenkes zwischen elastischer Einlage und starrer Form ein Zwischenraum vorgesehen ist. Durch die erfindungsgemäße Freistellung des elastischen Gelenkes wird beim öffnen der Form eine zusätzliche Beanspruchung der elastischen Einlage durch Einbeulen durch die inneren Kanten der starren Form vermieden. Die Lebensdauer der elastischen Einlage wird dadurch entscheidend erhöht.

Eine besonders niedrige Beanspruchung der elastischen Einlage ergibt sich, wenn, nach einem weiteren Merkmal der Erfindung, sich der Zwischenraum zwischen zwei Befestigungen der elastischen Einlage an der starren Form erstreckt.

Die Befestigungen können dabei auf mannigfache Art ausgebildet sein. Besonders vorteilhaft hat es sich erwiesen, wenn die Befestigung der elastischen Einlage an der starren Form über an der elastischen Einlage angeformte und in Nuten der starren Form eingeschobene Federn erfolgt.

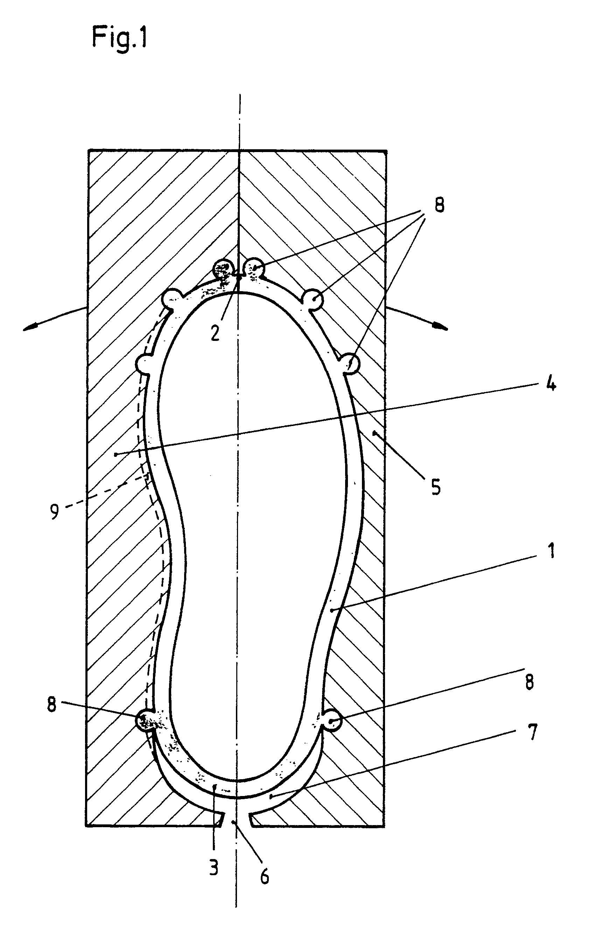

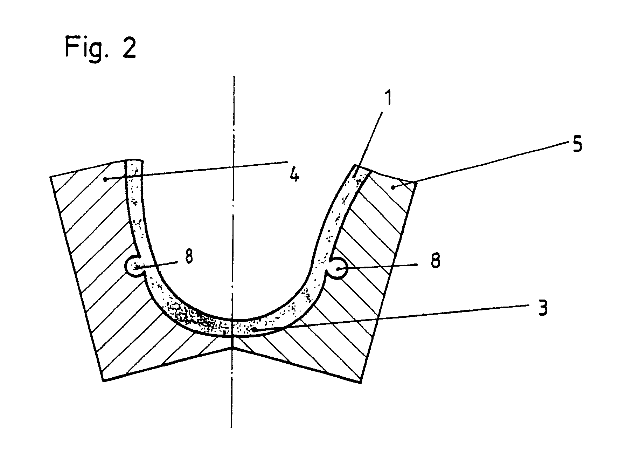

Die Erfindung ist nachstehend an Hand eines in der Zeichnung dargestellten Ausführungsbeispieles näher beschrieben, ohne jedoch auf dieses Beispiel beschränkt zu sein. Dabei zeigt Fig. 1 einen Querschnitt durch eine erfindungsgemäße Form im geschlossenen Zustand und Fig. 2 stellt den Bereich des elastischen Gelenkes der Form in offenem Zustand dar.

Die in der Zeichnung gezeigte Form zum Aufbringen von Sohlen auf Oberteile von Schuhen oder zum Herstellen von Sohlen weist eine der Form der Sohle entsprechend gestaltete Einlage 1 auf, die aus einem Elastomer besteht und einteilig ausgebildet ist. An der der Schuhspitze zugeordneten Seite der Einlage 1 ist diese entlang einer Trennfuge 2 geteilt, wobei der der Ferse entsprechende Teil 3 infolge der Elastizität der Einlage 1 gelenkig ist. Die Einlage 1 ist daher auf- und zuklappbar. Die verhälnismäßig dünne elastische Einlage 1 ist in starre, insbesondere metallische Formteile 4, 5 eingeschoben, wobei die Formteile 4, 5 im Bereich 6 im Abstand voneinander liegen, sodaß ein Aufklappen der Form möglich ist.

Im Bereich der Trennfuge 2 der elastischen Einlage 1 ist ein nicht dargestellter Einspritzkanal angeordnet, durch den beim Herstellen der Schuhsohle Kunststoffmaterial eingespritzt wird.

Um die Beanspruchung der elastischen Einlage 1 beim Aufklappen der Form zu vermindern, ist erfindungsgemäß bei geschlossener Form im Bereich des elastischen Gelenkes 3 zwischen der elastischen Einlage 1 und den starren Formteilen 4, 5 ein Zwischenraum 7 vorgesehen. Wie aus Fig. 1 ersichtlich ist, erstreckt sich der Zwischenraum 7 zwischen zwei Befestigungen 8 der elastischen Einlage 1 an den starren Formteilen 4, 5.

Die Befestigungen sind als Federn 9 ausgebildet, die an der elastischen Einlage mit etwa kreisförmigem Querschnitt angeformt sind und in Nuten der starren Formteile 4, 5 eingeschoben sind.

Beim Einsatz der erfindungsgemäßen Form wird diese aufgeklappt, wobei sich die starren Formteile 4, 5 im Bereich des elastischen Gelenkes 3 der elastischen Einlage 1 an diese anlegen. Zufolge des vorher vorhandenen Zwischenraumes 7 wird die elastische Einlage 1 durch die starren Formteile 4, 5 nicht eingedrückt.

Es kann nun in bekannter Weise ein Sohlenstempel eingelegt und ein auf einen Leisten aufgezogener Oberteil eines Schuhes von oben in die Form eingebracht werden. Sodann wird die Form geschlossen und Kunststoff über den in der Trennfuge 2 angeordneten Einspritzkanal eingespritzt.

Im Rahmen der Erfindung sind zahlreiche Abänderungen möglich. So ist in Fig. 1 strichliert angedeutet, daß zwischen der elastischen Einlage 1 und der starren Form 4,5 eine weitere elastische Einlage 9 angeordnet sein kann. Diese Einlage 9 besteht aus einem weit weicheren Material als die Einlage 1, so daß durch die Einlage 9 Größenabweichungen der Schuhe ausgeglichen werden können. Zufolge ihrer Weichheit kann sich die Einlage 9 bis in den Zwischenraum 7 erstrecken.

## Patentansprüche

1. Form zum Herstellen von Gegenständen, insbesondere Schuhsohlen, bestehend aus einer den Formhohlraum innen begrenzenden elastischen Einlage (1), die an einer Seite eine Trennfuge (2) besitzt und an der anderen Seite ein elastisches Gelenk (3) bildet, wobei die elastische Einlage (1) in einer starren, insbesondere metallischen mehrteiligen Form (4, 5) gehalten ist und in ihrer Trennfuge (2) einen Einspritzkanal aufweist, dadurch gekennzeichnet, daß bei geschlossener Form im Bereich des elastischen Gelenkes (3) zwischen elastischer Einlage (1) und starrer Form (4, 5) ein Zwischenraum (7) vorgesehen ist.

2. Form nach Anspruch 1, dadurch gekennzeichnet, daß sich der Zwischenraum (7) zwischen zwei Befestigungen (8) der elastischen Einlage (1) an der starren Form (4, 5) erstreckt.

3. Form nach Anspruch 2, dadurch gekennzeichnet, daß die Befestigung der elastischen Einlage (1) an der starren Form (4,5) über an der elastischen Einlage (1) angeformte und in Nuten der starren Form (4, 5) eingeschobene Federn (8) erfolgt.

## Claims

1. Mould for the manufacturing of objects, in particular shoe soles, consisting of an elastic insert (1) forming the interior lining of the mould cavity, with a mould-parting line (2) on the one side and an elastic joint (3) on the other side; the elastic insert (1) being held by a rigid, preferably metallic, multi-part mould (4, 5) and the mould-parting line (2) being equipped with an injection channel, characterized in that in case of the mould being closed, a clearance (7) is provided in the area of the elastic joint (3) between the elastic insert (1) and the rigid mould (4, 5).

2. Mould according to claim 1, characterized in that the clearance is located (7) between two fastening devices (8) of the elastic insert (1) on the rigid mould (4, 5).

3. Mould according to claim 2, characterized in that the elastic insert (1) is secured to the rigid mould (4, 5) by means of springs (8) attached to the elastic insert (1) and positioned in grooves on the rigid mould (4, 5).

## Revendications

1. Moule pour la fabrication d'objets, en particulier de semelles, composé d'une insertion élastique (1) qui définit l'intérieur de la cavité du moule et présente d'un côté une ligne de joint (2) et de l'autre côté une articulation élastique (3); cette articulation élastique (1) est retenue dans un moule (4, 5) rigide et multiple, en particulier fait de métal, et présente un canal d'injection dans la ligne de joint (2), caracterisé en ce qu'un espace intermédiaire (7) est prévu dans la région de l'articulation élastique (3) entre l'insertion élastique (1) et le moule rigide (4, 5) pendant que le moule est fermé.

2. Moule selon revendication 1, caracterisé en ce que l'espace intermédiaire (7) s'étend entre deux dispositifs de fixation (8) de l'insertion élastique (1) au moule (4, 5).

3. Moule selon revendication 2, caracterisé en ce que l'insertion élastique (1) est fixée au moule rigide (4, 5) à l'aide de ressorts (8), attachés à l'insertion élastique (1) et introduits dans des rainures du moule rigide (4, 5).

## Fig.1

Fig. 2